(19) Europäisches Patentamt
European Patent Office
Office européen des brevets

(11) EP 4 734 056 A1

(12) EUROPEAN PATENT APPLICATION

(43) Date of publication:
29.04.2026 Bulletin 2026/18

(21) Application number: 25183277.0

(22) Date of filing: 17.06.2025

(51) International Patent Classification (IPC):
G06T 7/246 (2017.01)    G06T 7/277 (2017.01)
G06V 10/00 (2022.01)

(52) Cooperative Patent Classification (CPC):
G06T 7/246; G06T 7/277; G06V 10/00;
G06T 2207/20081; G06T 2207/20084;
G06T 2207/30201; G06T 2207/30232;
G06T 2207/30241

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 24.10.2024 CN 202411495782

(71) Applicant: FUJITSU LIMITED
Kawasaki-shi, Kanagawa 211-8588 (JP)

(72) Inventors:
• Wang, Mengjiao
  Beijing, 100027 (CN)
• Liu, Rujie
  Beijing, 100027 (CN)

(74) Representative: Hoffmann Eitle
Patent- und Rechtsanwälte PartmbB
Arabellastraße 30
81925 München (DE)

(54) **METHOD, DEVICE, AND STORAGE MEDIUM FOR MULTIPLE OBJECT TRACKING**

(57)     The present disclosure relates to a method, a device, and a storage medium for multiple object tracking. According to an embodiment of the present disclosure, the method comprises: determining a plurality of object whole-body detection boxes in a current input image by performing object whole-body detection, and, determining a plurality of object head detection boxes in the current input image by performing object head detection; determining whole-body identifiers of the plurality of object whole-body detection boxes by performing whole-body trajectory association; determining head identifiers of the plurality of object head detection boxes by performing head trajectory association; determining a plurality of object whole-body prediction boxes corresponding to the plurality of object head detection boxes based on positions and sizes of the plurality of object head detection boxes; determining object whole-body association boxes of the plurality of object head detection boxes in the plurality of object whole-body detection boxes based on areas occupied by the plurality of object whole-body prediction boxes corresponding to the plurality of object head detection boxes in the input image; and updating the object whole-body trajectory set based on whole-body identifiers of the object whole-body association boxes.

Figure 1

**Description**

**CROSS-REFERENCE TO RELATED APPLICATIONS**

This application claims the priority benefit of Chinese Patent Application No. 202411495782.0, filed on October 24, 2024 in the China National Intellectual Property Administration, the disclosure of which is incorporated herein in its entirety by reference.

**FIELD OF THE INVENTION**

The present disclosure relates generally to image processing, and more particularly, to a method for multiple object tracking, a device for multiple object tracking, and a computer-readable non-transitory storage medium storing a program.

**BACKGROUND OF THE INVENTION**

With the development of computer science and artificial intelligence, it is becoming increasingly universal and effective to use computers to run artificial intelligence models based on neural networks to implement information processing. Computer vision is an important application field of artificial intelligence models.

A hotspot of computer vision technology is multi-target tracking. Multi-target tracking is commonly referred to as MTT (Multiple Target Tracking; sometimes also abbreviated as MOT: Multiple Object Tracking) briefly, which is used to detect and endow identifications (IDs) to objects of types of interest such as pedestrians, automobiles and/or animals in a video. A desired tracking result is that: for captured video segments, after multi-object tracking is performed, the same object is endowed with a unique ID in different frames, and in the same frame, different objects are endowed with different IDs. In video segments with object identifiers having been identified, each object in each frame has a position parameter P and a time parameter tm. Therefore, multi-object tracking can determine a sequence of "position-time" parameter pairs (P, tm) of an object Tg[n]. The sequence can indicate a trajectory Tr[n] of the object Tg[n]. That is, multi-object tracking can implement tracking of each object across frames and determine a trajectory of each object.

Taking a tracking object being a person as an example, multi-object tracking that implements tracking of each object across frames generally comprises three steps: (1) detecting an object (e.g., a pedestrian) in a t-th frame, and determining a detection position of the object (e.g., determining a detection box Bx of the object in the frame); (2) using a stored previous tracklet (from a first frame to a (t-1)-th frame) to predict a position of the object in the t-th frame; (3) by comparing the predicted position with the detection position (i.e., the position of the detection box) in the t-th frame, associating the detection position of the object in the t-th frame with a previously stored tracklet (for example, if the position of Bx is close to an object predicted position of a previous tracklet Tr[n] of an object Tg[n] whose ID is IDn, an ID attribute of Bx is assigned with the value of "IDn" to achieve association of Bx with the previous tracklet Tr[n], and accordingly, the tracklet Tr[n] has been increased by a trajectory point corresponding to Bx, that is, the tracklet Tr[n] is updated), thereby completing the updating for a tracking trajectory.

For example, Patent Document 1 (CN116958873A) discloses a pedestrian tracking method, wherein an object detection model outputs at least one human head detection box and at least one human body detection box. In the case of predetermined crowd density, for a human head detection box that fails to match to a human body detection box, an estimated human body detection box corresponding to the human head detection box is estimated based on the human head detection box, and an object identifier of the estimated human body detection box is output by a human body multi-object tracker.

In current multi-object tracking techniques, ID-switch is very common, especially in crowded scenes. ID-switch corresponds to the following phenomenon: a tracklet Tr[n] of an object Tg[n] actually contains trajectory points of another object Tg[n']. That is, a tracking trajectory has wrong trajectory points. In order to improve the overall performance of a tracking method, it is desired to correct ID-switch.

**SUMMARY OF THE INVENTION**

A brief summary of the present disclosure will be given below to provide a basic understanding of some aspects of the present disclosure. It should be understood that the summary is not an exhaustive summary of the present disclosure. It does not intend to define a key or important part of the present disclosure, nor does it intend to limit the scope of the present disclosure. The object of the summary is only to briefly present some concepts, which serves as a preamble of the detailed description that follows.

Having carried out study and experimentation on the existing multi-object tracking methods, the inventor proposed the solution of the present disclosure, for a desire to reduce ID-switch and improve the accuracy of multi-object tracking.

According to an aspect of the present disclosure, there is provided a method for multiple object tracking. The method comprises: determining a plurality of object whole-body detection boxes in a current input image by performing object whole-body detection, and, determining a plurality of object head detection boxes in the current input image by performing object head detection; determining whole-body identifiers of the plurality of object whole-body detection boxes by performing whole-body trajectory association, to update an object whole-body trajectory set; determining head identifiers of the plurality of object head detection boxes by performing head trajectory association, to update an object head trajectory set; determining a plurality of object whole-body prediction boxes corresponding to the plurality of object head detection boxes based on positions and sizes of the plurality of object head detection boxes; determining object whole-body association boxes of the plurality of object head detection boxes in the plurality of object whole-body detection boxes based on areas occupied by a plurality of object whole-body prediction boxes corresponding to the plurality of object head detection boxes in the input image; and updating the object whole-body trajectory set based on whole-body identifiers of the object whole-body association boxes of the plurality of object head detection boxes.

According to an aspect of the present disclosure, there is provided a device for multiple object tracking. The device comprises: a memory having instructions stored thereon; and at least one processor configured to execute the instructions to implement the aforementioned method for multiple object tracking.

According to another aspect of the present disclosure, there is provided a computer-readable non-transitory storage medium storing a program. The program, when executed by a computer, causes the computer to implement the aforementioned method for multiple object tracking.

The beneficial effects of the method, device and storage medium of the present disclosure include at least one of: reducing ID-switch and improving the accuracy of multi-object tracking.

## BRIEF DESCRIPTION OF THE DRAWINGS

Embodiments of the present disclosure will be described below with reference to the accompanying drawings, which will help to more easily understand the above and other objects, features and advantages of the present disclosure. The accompanying drawings are merely intended to illustrate the principles of the present disclosure. The sizes and relative positions of units are not necessarily drawn to scale in the accompanying drawings. The same reference numbers may denote the same features. In the accompanying drawings:

Figure 1 illustrates an exemplary flowchart of a method for multiple object tracking according to an embodiment of the present disclosure;

Figure 2a illustrates an exemplary schematic diagram of a (t-1) frame of input image according to an embodiment of the present disclosure;

Figure 2b illustrates an exemplary schematic diagram of a t frame of input image according to an embodiment of the present disclosure;

Figure 2c illustrates true object trajectories corresponding to Figure 2a and Figure 2b.

Figure 3a illustrates object whole-body detection boxes detected in the input image as illustrated in Figure 2b;

Figure 3b illustrates object head detection boxes detected in the input image as illustrated in Figure 2b;

Figure 4a illustrates assigned whole-body identifiers of the object whole-body detection boxes as illustrated in Figure 3a;

Figure 4b illustrates object whole-body trajectories corresponding to the whole-body identifiers as illustrated in Figure 4a;

Figure 5a illustrates assigned head identifiers of the object head detection boxes as illustrated in Figure 3b;

Figure 5b illustrates object head trajectories corresponding to the head identifiers as illustrated in Figure 5a;

Figure 6a illustrates corresponding object whole-body prediction boxes corresponding to the object head detection boxes as illustrated in Figure 2b;

Figure 6b illustrates object whole-body association boxes of the object head detection boxes as illustrated in Figure 2b;

Figure 7a illustrates whole-body identifiers after correcting whole-body identifiers of corresponding detection boxes of a current trajectory point in Figure 4a;

Figure 7b illustrates object whole-body trajectories obtained based on the corrected whole-body identifiers in Figure 7a;

Figure 8 illustrates an exemplary block diagram of a device for multiple object tracking according to an embodiment of the present disclosure;

Figure 9 illustrates an exemplary block diagram of a device for multiple object tracking according to an embodiment of the present disclosure; and

Figure 10 is an exemplary block diagram of an information processing apparatus according to an embodiment of the present disclosure.

**DETAILED DESCRIPTION OF THE INVENTION**

Hereinafter, exemplary embodiments of the present disclosure will be described combined with the accompanying drawings. For the sake of clarity and conciseness, the specification does not describe all features of actual embodiments. However, it should be understood that many decisions specific to the embodiments may be made in developing any such actual embodiment, so as to achieve specific objects of a developer, and these decisions may vary as embodiments are different.

It should also be noted herein that, to avoid the present disclosure from being obscured due to unnecessary details, only those device structures closely related to the solution according to the present disclosure are shown in the accompanying drawings, while other details not closely related to the present disclosure are omitted.

It should be understood that, the present disclosure will not be limited only to the described embodiments due to the following description with reference to the accompanying drawings. Herein, where feasible, embodiments may be combined with each other, features may be substituted or borrowed between different embodiments, and one or more features may be omitted in one embodiment.

Computer program code for performing operations of various aspects of embodiments of the present disclosure can be written in any combination of one or more programming languages, the programming languages including object-oriented programming languages, such as Java, Smalltalk, C++ and the like, and further including conventional procedural programming languages, such as "C" programming language or similar programming languages.

Methods of the present disclosure can be implemented by circuitry having corresponding functional configurations. The circuitry includes circuitry for a processor.

An aspect of the present disclosure relates to a method for multiple object tracking. The method can be implemented by a computer. The inventor carried out study on a multi-object tracking model that implements multi-object tracking, and found that in an input frame, part or entirety of a torso of an object is more likely to be occluded than a head of the object, which may cause occurrence of ID-switch and reduction of tracking accuracy. For this reason, through experimentation, the inventor proposed a multi-object tracking method based on the joint of a head and a whole body, so as to alleviate the aforementioned problem.

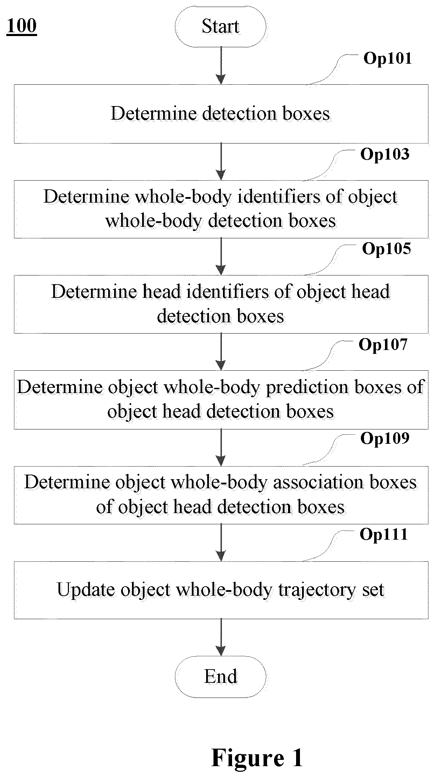

The method is exemplarily described below with reference to Figure 1.

Figure 1 illustrates an exemplary flowchart of a method 100 for multiple object tracking according to an embodiment of the present disclosure. In an example, the method 100 is implemented by a computer that runs a corresponding computer program.

In operation Op101, a plurality of object whole-body detection boxes in a current input image Im[t] is determined by performing object whole-body detection (hereinafter, an object whole-body detection box is represented by B[I], and an object whole-body detection box set is represented by {B[I]}), and, a plurality of object head detection boxes in the current input image is determined by performing object head detection (hereinafter, an object head detection box is represented by b[i], and an object head detection box set is represented by {b[i]}). t is an index of an input image. For example, t is a frame serial number of an input image. An object is a human being. An object head detection box is used to indicate an area where a head of an object is located in an image. An object whole-body detection box is used to indicate an area where a whole body (an entire body of an object including a head and a torso) of an object is located in an image. A height, width, position (e.g., upper left corner coordinates and/or lower right corner coordinates) or the like of each detection box can be determined based on an output result of operation Op101.

An input image can come from a camera that monitors a place of interest. An installation height of the camera is preferably greater than or equal to 1.5 meters. The installation height of the camera is, for example, 1.5 meters, 1.6 meters, 1.7 meters, 1.8 meters, 1.9 meters, 2.0 meters, or 2.4 meters, etc. When the camera is installed indoors, the camera can be installed at a height close to the ceiling.

In an example, object whole-body detection and object head detection are implemented with the same model dM. This can be expressed as:

({B[I]}, {b[i]})=dM(Im[t]).

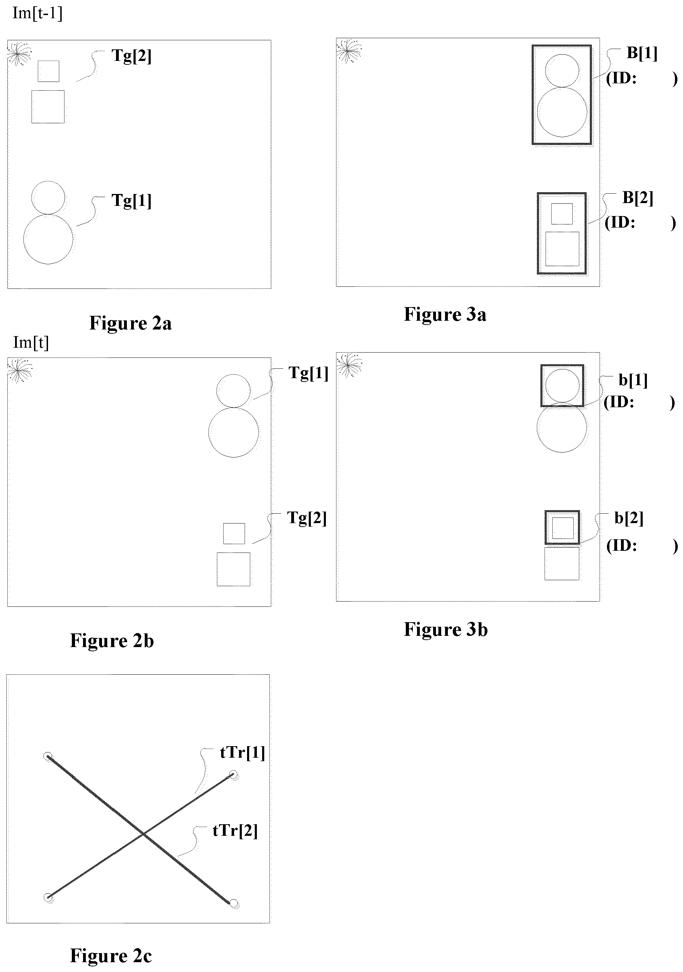

For example, the image Im[t] is input into the model dM, which outputs a plurality of object whole-body detection boxes and a plurality of object head detection boxes and optionally can also output related parameters (such as a width, height, and confidence) thereof, wherein the number of detected object whole-body detection boxes and the number of detected object head detection boxes may be either equal or unequal (including cases of being greater or less). The model dM can be a model based on a neural network. A model obtained after training the model using samples can be used to implement operation Op101. For example, there are both objects Tg[1] and Tg[2] in the camera's monitoring field of view; as illustrated in Figure 2a, the objects Tg[1] and Tg[2] are located on a left side of the field of view when being at a (t-1) frame; as illustrated in Figure 2b, the objects Tg[1] and Tg[2] are located on a right side of the field of view (that is, travel to the right side) when being at a frame t; Figure 2c illustrates true trajectories tTr[1], tTr[2] formed by such travelling, wherein trajectory points at earlier times are omitted for the sake of clarity; and after the image Im[t] is input into the model dM, the model dM will output 4 detection boxes: the object whole-body detection boxes B[1] and B[2] as illustrated in Figure 3a (this stage belongs to a detection stage, without assigning a whole-body identifier wID to each detection box yet), and the object head detection boxes b[1] and b[2] as illustrated in Figure 3b (this stage belongs to a detection stage, without assigning a head identifier hID to each detection box yet).

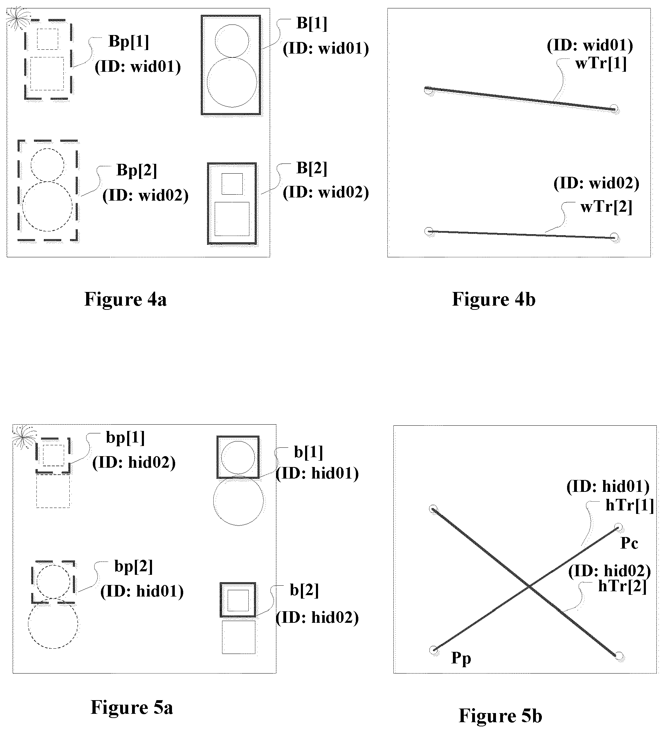

In operation Op103, whole-body identifiers of the plurality of object whole-body detection boxes are determined by performing whole-body trajectory association, to update an object whole-body trajectory set {wTr[j]}. For example, a whole-body identifier (B[I].wID=widX; i.e., an object identifier that distinguishes trajectories of different objects) is assigned to each (B[I]) of the plurality of object whole-body detection boxes based on a previous whole-body trajectory set. The assigned whole-body identifier comes from whole-body identifiers in a whole-body object identifier set corresponding to the previous whole-body trajectory set or new whole-body identifiers. That is, if a new object appears, the whole-body object identifier set will also be updated. For example, if a position of B[I] is close to an object predicted position of an end trajectory point of a previous whole-body tracklet wTr[n] of an object Tg[n] whose ID is "widn", an ID attribute of B[I] is assigned with the value of "widn" to achieve association of B[I] with the previous whole-body tracklet wTr[n]. Figure 4a exemplarily illustrates whole-body identifiers "wid01" and "wid02" associated with the object whole-body detection boxes B[1] and B[2] as illustrated in Figure 3a, wherein an assigned whole-body identifier of a previous object whole-body detection box Bp at the t-1 frame is also illustrated. Figure 4b illustrates object whole-body trajectories wTr[1] and wTr[2] corresponding to the whole-body identifier assignments as illustrated in Figure 4a. Through comparison with the true trajectories as illustrated in Figure 2c, it can be known that the associated whole-body identifiers of the two object whole-body detection boxes at the t frame as illustrated in Figure 4a are wrong, with occurrence of an identification-switch, which causes the trajectories as illustrated in Figure 4b to be also incorrect (wherein, trajectory points at earlier times are omitted for the sake of clarity). Referring to the following description, the method 100 can correct such errors based on the joint of a head and a whole body.

In operation Op105, head identifiers of the plurality of object head detection boxes are determined by performing head trajectory association, to update an object head trajectory set {hTw[k]}. For example, a head identifier (b[i].hID=hidX) is assigned to each (b[i]) of the plurality of object head detection boxes based on a previous head trajectory set. The assigned head identifier comes from head identifiers in a head object identifier set corresponding to the previous head trajectory set or new head identifiers. That is, if a new object appears, the head object identifier set will also be updated. An intersection of the head object identifier set with the whole-body object identifier set is an empty set. Figure 5a exemplarily illustrates head identifiers "hid01" and "hid02" associated with the object head detection boxes b[1] and b[2] as illustrated in Figure 3b, wherein an assigned head identifier of a previous object head detection box bp at the t-1 frame is also illustrated. It can be seen that, the same head identifier corresponds to the same object, that is, trajectories generated based on object head detection boxes are correct. Figure 5b illustrates object head trajectories hTr[1] and hTr[2] corresponding to the head identifier assignments as illustrated in Figure 5a, wherein a current trajectory point corresponding to the t frame is represented by Pc, and a previous trajectory point corresponding to the (t-1) frame is represented by Pp. Through comparison with the true trajectories as illustrated in Figure 2c, it can be known that the trajectories as illustrated in Figure 5b are correct. Having analyzed captured images for multi-object tracking, the inventor regarded that: occlusion would easily lead to identifier-switch; in the captured images, a probability of a head to be severely occluded is relatively lower than that of a torso part; thus, a possibility of correct trajectories generated by object tracking based on head detection boxes is higher, and a tracking result based on the whole-body detection boxes can be corrected based on a tracking result of the head detection boxes.

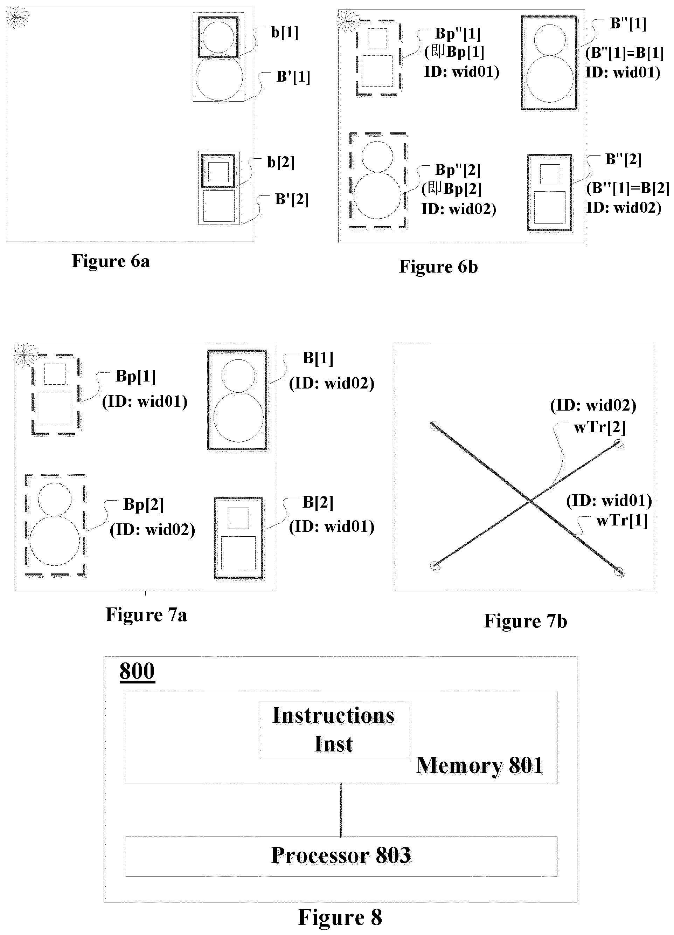

In operation Op107, a plurality of object whole-body prediction boxes corresponding to the plurality of object head detection boxes is determined based on positions and sizes of the plurality of object head detection boxes. A corresponding object whole-body prediction box of the object head detection box b[i] can be represented by b[i].B' or B'[i]. Figure 6a illustrates corresponding object whole-body prediction boxes B'[1], B'[2] corresponding to the object head detection boxes b[1], b[2] as illustrated in Figure 2b.

In operation Op109, object whole-body association boxes of the plurality of object head detection boxes in the plurality of object whole-body detection boxes are determined based on areas occupied by the plurality of object whole-body prediction boxes corresponding to the plurality of object head detection boxes in the input image Im[t]. An object whole-body association box of the object head detection box b[i] can be represented by b[i].B" or B"[i]. An object whole-body association box B"[i] of the object head detection box b[i] in the plurality of object whole-body detection boxes is determined based on an area occupied by the object whole-body prediction box B'[i] of the object head detection box b[i] in the input image Im[t]. That is, an object whole-body detection box is selected from the object whole-body detection box set {B[I]}, as the object whole-body association box B"[i] of the object head detection box b[i]. Figure 6b illustrates object whole-body association boxes B"[1], B"[2] of the object head detection boxes b[1], b[2] as illustrated in Figure 2b, wherein B"[1]=B [1]; B"[2]=B[2], that is, a whole-body identifier of the detection box b[1] which is determined by the object whole-body association box thereof is "wid01", and a whole-body identifier of the detection box b[2] which is determined by the object whole-body associated box thereof is "wid02". Figure 6b also illustrates an object whole-body association box Bp" and its whole-body identifier in the t-1 frame. Through comparison between Figure 5a and Figure 6b, it can be seen that: a whole-body identifier ("wid01") of an association box (B"[1]=B[1]) of a current trajectory point Pc (corresponding to the detection box b[1]) whose head identifier is "hid01" is different from a whole-body identifier ("wid02") of an association box (Bp[2]) of a previous trajectory point Pp (corresponding to the detection box b[2]), that is, whole-body identifiers of two respective whole-body association boxes (e.g., B[1] and Bp[2]) of two recent trajectory points of an object trajectory of the same object determined by head detection boxes are inconsistent. This indicates that a whole-body identification ("wid01") of a recent respective whole-body association box (e.g., B[1]) in the two respective whole-body association boxes may be incorrect and needs to be corrected.

In operation Op111, the object whole-body trajectory set {wTr[j]} is updated based on whole-body identifiers of the object whole-body association boxes of the plurality of object head detection boxes. That is, the previously obtained object whole-body trajectory set is corrected based on the whole-body identifiers of the object whole-body association boxes.

In an embodiment, updating the object whole-body trajectory set based on the whole-body identifiers of the object whole-body association boxes of the plurality of object head detection boxes comprises: for each trajectory in the object head trajectory set {hTr[k]}, if a whole-body identifier Pc.B".wID of an object whole-body association box of a current trajectory point of the trajectory is different from a whole-body identifier Pp.B".wID of an object whole-body association box of a previous trajectory point Pp of the trajectory, substituting the whole-body identifier of the object whole-body association box of the current trajectory point with the whole-body identifier of the object whole-body association box of the previous trajectory point. If the two whole-body identifiers are the same, no substitution processing is performed. It can be understood that, if the current trajectory point is a first trajectory point of the object head trajectory, the aforementioned judgment operation is not performed for the object head trajectory, and accordingly the aforementioned substitution operation is not performed, either. Figure 7a illustrates whole-body identifiers after correcting the whole-body identifiers of the corresponding detection boxes B[1], B[2] of the current trajectory point in Figure 4a, and Figure 7b illustrates object whole-body trajectories wTr[1] and wTr[2] obtained based on the corrected whole-body identifiers in Figure 7a. Related information on the current trajectory point Pc and the previous trajectory point Pp of the object head trajectory hTr[1] in Figure 5b is as shown in Table 1.

Table 1 Related Information of Object head Trajectory hTr[1]

|  | b<br>(Figure 5a) | b.hID<br>(Figure 5a) | b.B"<br>(Figure 6b) | B".wID | |
|---|---|---|---|---|---|
|  |  |  |  | Before<br>Correction<br>(Figure 6b) | After<br>Correction<br>(Figure 7a) |
| Pc | b[1] | hid01 | B[1] | **wid01** | wid02 |
| Pp | bp[2] | hid01 | Bp[2] | wid02 | wid02 |

Related information on the current trajectory point Pc and the previous trajectory point Pp of the object head trajectory hTr[2] in Figure 5b is as shown in Table 2.

Table 2 Related Information of Object head Trajectory hTr[2]

| | b (Figure5a) | b.hID (Figure5a) | b.B" (Figure 6b) | B".wID | |
| --- | --- | --- | --- | --- | --- |
| | | | | Before Correction (Figure 6b) | After Correction (Figure 7a) |
| Pc | b[2] | hid02 | B[2] | **wid02** | wid01 |
| Pp | bp[1] | hid02 | Bp[1] | wid01 | wid01 |

The trajectories wTr[1] and wTr[2] as illustrated in Figure 7b are consistent with the true trajectories tTr[1] and tTr [2] as illustrated in Figure 2c. Therefore, it is beneficial to utilize the joint of a head and a whole body to correct object whole-body trajectories based on association boxes, which is conducive to reducing identification-switch and improving the accuracy of multi-object tracking.

In an embodiment, the plurality of object whole-body detection boxes and the plurality of object head detection boxes in the current input image are determined with a single object detection model (also called a "head-body joint detection model"). The head-body joint detection model can be a conventional YOLOX-based detection model.

In an embodiment, the method 100 can be configured to perform offline multi-object tracking or online multi-object tracking.

In an embodiment, determining the whole-body identifiers of the plurality of object whole-body detection boxes {B [I]} (i.e. associating each object whole-body detection box with a respective object whole-body trajectory, as a latest trajectory point of the respective object whole-body trajectory) and determining the head identifiers of the plurality of object head detection boxes {b[i]} (i.e. associating each object head detection box with a respective object head trajectory, as a latest trajectory point of the respective object head trajectory) are based on an object tracking algorithm such as Bytetrack. Further, the whole-body identifiers of the plurality of object whole-body detection boxes in the current input image are determined through a first Kalman filter; and the head identifiers of the plurality of object head detection boxes in the current input image are determined through a second Kalman filter different from the first Kalman filter.

In an embodiment, determining an object whole-body prediction box corresponding to an object head detection box among the plurality of object head detection boxes comprises: determining an abscissa component of a position of the object whole-body prediction box by linearly combining an abscissa component of a position of and a width of the object head detection box; determining an ordinate component of the position of the object whole-body prediction box by linearly combining an ordinate component of the position of and a height of the object head detection box; determining a width of the object whole-body prediction box by enlarging the width of the object head detection box; and determining a height of the object whole-body prediction box by enlarging the height of the head detection box. Exemplary calculation formulae with regard to a position, height, and width of the object whole-body prediction box are as illustrated in equations (1), (2), (3), and (4).

$$x_{body} = x_{head} + C_1 * w_{head} \qquad (1)$$

$$y_{body} = y_{head} + C_2 * h_{head} \qquad (2)$$

$$w_{body} = C_3 * w_{head} \qquad (3)$$

$$h_{body} = C_4 * h_{head} \qquad (4)$$

where, $(x_{head}, y_{head})$ is upper left corner coordinates of the object head detection box b[i]; $w_{head}$ is a width of the object head detection box b[i]; $h_{head}$ is a height of the object head detection box b[i]; $(x_{body}, y_{body})$ is upper left corner coordinates of the object body prediction box B'[i] of the object head detection box b[i]; $w_{body}$ is a width of the object body prediction box B'[i] of the object head detection box b[i]; $h_{body}$ is a height of the object body prediction box B'[i] of the object head detection box b [i]; $C_1$, $C_2$, $C_3$ and $C_4$ are constants whose numerical values can be determined according to experimentation.

In an embodiment, determining the object whole-body association boxes of the plurality of object head detection boxes in the plurality of object whole-body detection boxes comprises: determining an Intersection over Union (IoU) matrix based on the plurality of object whole-body prediction boxes and the plurality of object whole-body detection boxes; and

applying the Hungarian algorithm to the Intersection over Union matrix to determine a corresponding object whole-body association box of each object head detection box; and wherein each element in the Intersection over Union matrix is an Intersection over Union between a corresponding object whole-body detection box among the plurality of object whole-body detection boxes and a corresponding object whole-body prediction box among the plurality of object whole-body prediction boxes.

In an embodiment, performing the whole-body trajectory association comprises associating a current object whole-body detection box with an object whole-body trajectory in a generated object whole-body trajectory set based on the Hungarian algorithm; and performing the head trajectory association comprises associating a current object head detection box with an object head trajectory in a generated object head trajectory set based on the Hungarian algorithm.

Generally speaking, training samples of a detection model used for determining object whole-body detection boxes are sufficient, but the number of samples with both head detection boxes and body detection boxes being annotated may be insufficient. For example, the known dataset MOT20 in the MOT field has only body annotations, but has no head annotations. This results in insufficient samples used for training the object detection model of the present invention. Therefore, the inventor conceived the following solution. In an embodiment, the single object detection model is a model obtained by performing operations of: training, with a first data set (e.g., the known dataset in the MOT field: CrowdHuman) including object head box annotations and object whole-body box annotations, a first object detection model based on a neural network so that the first object detection model can output object head detection boxes and object whole-body detection boxes of a test image; adding, with the trained first object detection model, lacking annotations to a second data set that lacks object head box annotations or object whole-body box annotations; and training, with the first data set and the second data set which has been added with the lacking annotations, a second object detection model as the single object detection model; wherein the second data set has more training samples than the first data set.

The corrected object trajectories generated by the method 100 can be used for subsequent evaluation or extraction of object appearance features.

According to an aspect of the present disclosure, there is provided a device for multiple object tracking. Figure 8 illustrates an exemplary block diagram of a device 800 for multiple object tracking according to an embodiment of the present disclosure.

The device 800 comprises: a memory 801 having instructions Inst stored thereon; and at least one processor 803 configured to execute the instructions Inst to implement the method 100.

According to an aspect of the present disclosure, there is provided a computer-readable non-transitory storage medium storing a program. The program, when executed by a computer, causes the computer to perform operations of: determining a plurality of object whole-body detection boxes in a current input image by performing object whole-body detection, and, determining a plurality of object head detection boxes in the current input image by performing object head detection; determining whole-body identifiers of the plurality of object whole-body detection boxes by performing whole-body trajectory association, to update an object whole-body trajectory set; determining head identifiers of the plurality of object head detection boxes by performing head trajectory association, to update an object head trajectory set; determining a plurality of object whole-body prediction boxes corresponding to the plurality of object head detection boxes based on positions and sizes of the plurality of object head detection boxes; determining object whole-body association boxes of the plurality of object head detection boxes in the plurality of object whole-body detection boxes based on areas occupied by the plurality of object whole-body prediction boxes corresponding to the plurality of object head detection boxes in the input image; and updating the object whole-body trajectory set based on whole-body identifiers of the object whole-body association boxes of the plurality of object head detection boxes. For more details of the program, reference may be made to the description of the method 100.

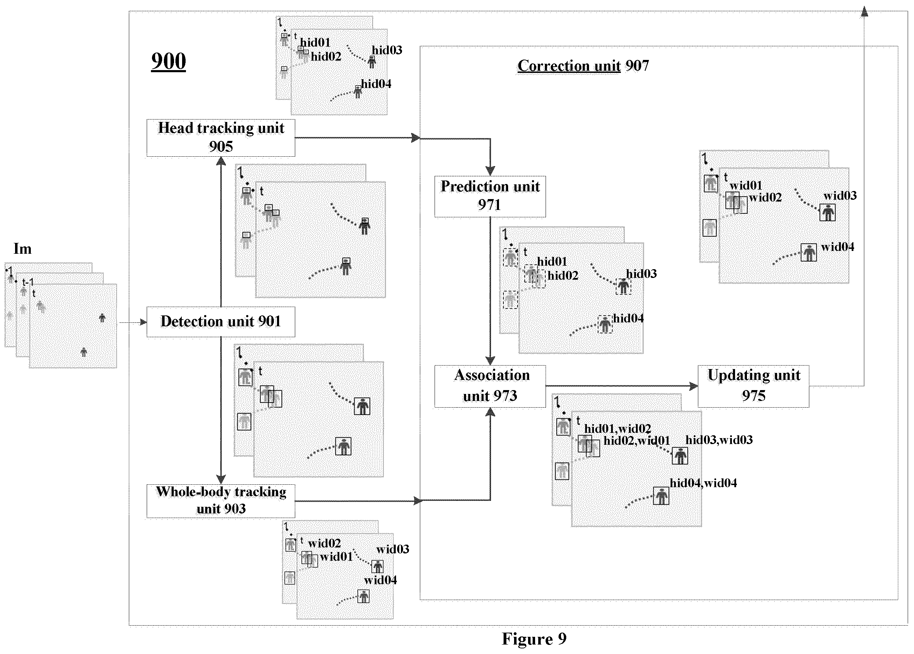

According to an aspect of the present disclosure, there is further provided a device for multiple object tracking. Figure 9 illustrates an exemplary block diagram of a device 900 for multiple object tracking according to an embodiment of the present disclosure.

The device 900 comprises: a detection unit 901, a whole-body tracking unit 903, a head tracking unit 905, and a correction unit 907. The detection unit 901 is configured to: determine a plurality of object whole-body detection boxes in a current input image Im[t] by performing object whole-body detection, and, determine a plurality of object head detection boxes in the current input image by performing object head detection. The whole-body tracking unit 903 is configured to determine whole-body identifiers of the plurality of object whole-body detection boxes by performing whole-body trajectory association, to update an object whole-body trajectory set. Figure 9 exemplarily illustrates whole-body identifiers wid01, wid02, wid03, and wid04 determined by the whole-body tracking unit 903 for the object whole-body detection boxes in the image Im[t]. The head tracking unit 905 is configured to determine head identifiers of the plurality of object head detection boxes by performing head trajectory association, to update an object head trajectory set. Figure 9 exemplarily illustrates head identifiers hid01, hid02, hid03, and hid04 determined by the head tracking unit 905 for the object head detection boxes in the image Im[t]. The correction unit 907 comprises a prediction unit 971, an association unit 973, and an updating unit 975. The prediction unit 971 is configured to determine a plurality of object whole-body prediction boxes (see the dotted boxes illustrated in Figure 9) corresponding to the plurality of object head detection boxes based on positions and sizes of the plurality of object head detection boxes. The association unit 973 is configured to determine object whole-body association boxes of the plurality of object head detection boxes in the plurality of object whole-body detection boxes based on areas occupied by the plurality of object whole-body prediction boxes corresponding to the plurality of object head detection boxes in the input image (referring to Figure 9, each head identifier has been associated with a whole-body identifier, wherein it is exemplarily assumed that whole-body identifiers of object whole-body detection boxes (i.e., object whole-body association boxes) of the two objects whose head identifiers are hid01 and hid02 have undergone identifier-switch). The updating unit 975 is configured to update the object whole-body trajectory set based on whole-body identifiers of the object whole-body association boxes of the plurality of object head detection boxes (referring to Figure 9, the identifier-switch of the object whole-body detection boxes of the two objects whose head identifiers are hid01 and hid02 has been corrected). Table 3 illustrates a correction situation of a current trajectory point (corresponding to the input image Im[t]) of a trajectory whose whole-body identifier is"wid01". For more details of the device 900, reference may be made to the description of the method 100.

Table 3 Correction of Trajectory Whose Whole-body Identifier is "wid01"

| | | 1 | 2 | ●●● | t-1 | t |
|---|---|---|---|---|---|---|
| b.hID | | hid01 | hid01 | ●●● | hid01 | hid01 |
| b.B".wID | Before Correction | wid01 | wid01 | ●●● | wid01 | **wid02** |
| | After Correction | wid01 | wid01 | ●●● | wid01 | **wid01** |

According to an aspect of the present disclosure, there is further provided an information processing apparatus.

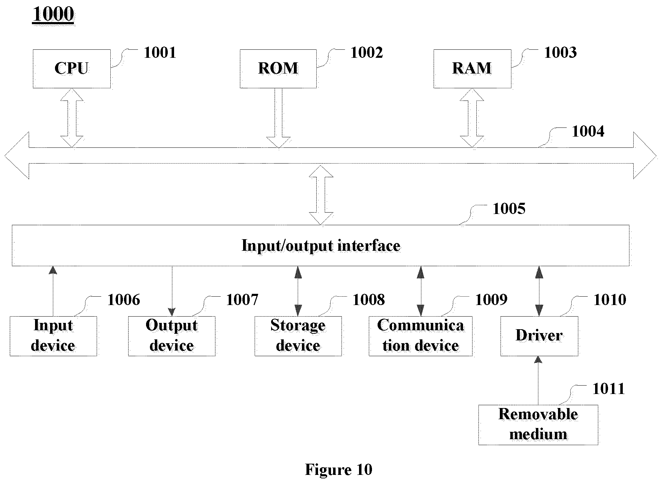

Figure 10 illustrates an exemplary block diagram of an information processing apparatus 1000 according to an embodiment of the present disclosure. In Figure 10, a Central Processing Unit (CPU) 1001 executes various processing according to programs stored in a Read-Only Memory (ROM) 1002 or programs loaded from a storage device 1008 to a Random Access Memory (RAM) 1003. In the RAM 1003, data needed when the CPU 1001 executes various processing and the like is also stored as needed.

The CPU 1001, the ROM 1002 and the RAM 1003 are connected to each other via a bus 1004. An input/output interface 1005 is also connected to the bus 1004.

The following components are connected to the input/output interface 1005: an input device 1006, including a soft keyboard and the like; an output device 1007, including a display such as a Liquid Crystal Display (LCD) and the like, as well as a speaker and the like; the storage device 1008 such as a hard disc and the like; and a communication device 1009 including a network interface card such as an LAN card, a modem and the like. The communication device 1009 executes communication processing via a network such as the Internet, a local area network, a mobile network or a combination thereof.

A driver 1010 is also connected to the input/output interface 1005 as needed. A removable medium 1011 such as a semiconductor memory and the like is installed on the driver 1010 as needed, such that programs read therefrom are installed in the storage device 1008 as needed.

The CPU 1001 can run a program corresponding to the method for multiple object tracking of the present disclosure.

In order to verify effects of the method 100, the inventor carried out tests on two different test datasets: FRDCCrowd (an internal dataset), and MOT20 (a public dataset), with results being as illustrated in Table 4. The results show that, after a head-body joint tracking method is used to correct ID-switch in a whole-body tracking trajectory, the method 100 can improve the accuracy of multi-object tracking (see the numerical values of the evaluation index IDF1 of multi-object tracking MOT).

Table 4 Test Effects of Method 100

| IDF1 | Conventional Multi-object tracking Method (utilizing only whole-body detection boxes) | Method 100 (including a correction operation utilizing the joint of head and whole-body detection boxes) |
|---|---|---|
| FRDCCrowd20 | 68.6 | **73.6** |
| FRDCCrowd40 | 59.4 | **63.1** |
| FRDCCrowd60 | 45.0 | **47.0** |

(continued)

| IDF1 | Conventional Multi-object tracking Method (utilizing only whole-body detection boxes) | Method 100 (including a correction operation utilizing the joint of head and whole-body detection boxes) |
|---|---|---|
| MOT20(01,02) | 63.8 | **64.7** |

In the present disclosure: an object head trajectory is used to check whether an associated object whole-body trajectory has undergone ID-switch. If a tracking ID of an associated whole-body detection box changes, it is considered that this is ID-switch, and the object whole-body trajectory is corrected by changing the tracking ID thereof. The application fields of the present disclosure include but are not limited to: video monitoring in public places, intelligent monitoring, behavior recognition, and personnel tracking. The beneficial effects of the method, device and storage medium of the present disclosure include at least one of: reducing ID-switch and improving the accuracy of multi-object tracking.

As described above, according to the present disclosure, the principle of multiple object tracking has been disclosed. It should be noted that, the effects of the solution of the present disclosure are not necessarily limited to the above-mentioned effects, and in addition to or instead of the effects described in the preceding paragraphs, any of the effects as shown in the specification or other effects that can be understood from the specification can be obtained.

Although the present invention has been disclosed above through the description with regard to specific embodiments of the present invention, it should be understood that those skilled in the art can design various modifications (including, where feasible, combinations or substitutions of features between various embodiments), improvements, or equivalents to the present invention within the spirit and scope of the appended claims. These modifications, improvements or equivalents should also be considered to be included within the protection scope of the present invention.

It should be emphasized that, the term "comprise/include" as used herein refers to the presence of features, elements, operations or assemblies, but does not exclude the presence or addition of one or more other features, elements, operations or assemblies.

In addition, the methods of the various embodiments of the present invention are not limited to be executed in the time order as described in the specification or as shown in the accompanying drawings, and may also be executed in other time orders, in parallel or independently. Therefore, the execution order of the methods as described in the specification fails to constitute a limitation to the technical scope of the present invention.

Appendix

The present disclosure includes but is not limited to the following solutions.

1. A method for multiple object tracking, comprising:

determining a plurality of object whole-body detection boxes in a current input image by performing object whole-body detection, and, determining a plurality of object head detection boxes in the current input image by performing object head detection;

determining whole-body identifiers of the plurality of object whole-body detection boxes by performing whole-body trajectory association, to update an object whole-body trajectory set;

determining head identifiers of the plurality of object head detection boxes by performing head trajectory association, to update an object head trajectory set;

determining a plurality of object whole-body prediction boxes corresponding to the plurality of object head detection boxes based on positions and sizes of the plurality of object head detection boxes;

determining object whole-body association boxes of the plurality of object head detection boxes in the plurality of object whole-body detection boxes based on areas occupied by the plurality of object whole-body prediction boxes corresponding to the plurality of object head detection boxes in the input image; and

updating the object whole-body trajectory set based on whole-body identifiers of the object whole-body association boxes of the plurality of object head detection boxes.

2. The method according to Appendix 1, wherein the updating of the object whole-body trajectory set based on the whole-body identifiers of the object whole-body association boxes of the plurality of object head detection boxes comprises:

for each trajectory in the object head trajectory set, if a whole-body identifier of an object whole-body association box of a current trajectory point of the trajectory is different from a whole-body identifier of an object whole-body association box of a previous trajectory point of the trajectory, substituting the whole-body identifier of the object whole-body association box of the current trajectory point with the whole-body identifier of the object whole-body association box of the previous trajectory point.

3. The method according to Appendix 1, wherein the plurality of object whole-body detection boxes and the plurality of object head detection boxes in the current input image are determined with a single object detection model.

4. The method according to Appendix 1, wherein the method is configured to be applicable to online multiple object tracking.

5. The method according to Appendix 1, wherein the determining of the whole-body identifiers of the plurality of object whole-body detection boxes and the determining of the head identifiers of the plurality of object head detection boxes are based on an object tracking algorithm.

6. The method according to Appendix 5, wherein the whole-body identifiers of the plurality of object whole-body detection boxes in the current input image are determined through a first Kalman filter; and
the head identifiers of the plurality of object head detection boxes in the current input image are determined through a second Kalman filter different from the first Kalman filter.

7. The method according to Appendix 1, wherein determining an object whole-body prediction box corresponding to an object head detection box among the plurality of object head detection boxes comprises:

determining an abscissa component of a position of the object whole-body prediction box by linearly combining an abscissa component of a position of the object head detection box and a width of the object head detection box;

determining an ordinate component of the position of the object whole-body prediction box by linearly combining an ordinate component of the position of the object head detection box and a height of the object head detection box;

determining a width of the object whole-body prediction box by enlarging the width of the object head detection box; and

determining a height of the object whole-body prediction box by enlarging the height of the head detection box.

8. The method according to Appendix 1, wherein the determining of the object whole-body association boxes of the plurality of object head detection boxes in the plurality of object whole-body detection boxes comprises:

determining an Intersection over Union matrix based on the plurality of object whole-body prediction boxes and the plurality of object whole-body detection boxes; and

applying the Hungarian algorithm to the Intersection over Union matrix to determine a corresponding object whole-body association box of each object head detection box; and

wherein each element in the Intersection over Union matrix is an Intersection over Union between a corresponding object whole-body detection box among the plurality of object whole-body detection boxes and a corresponding object whole-body prediction box among the plurality of object whole-body prediction boxes.

9. The method according to Appendix 1, wherein the performing of the whole-body trajectory association comprises associating a current object whole-body detection box with an object whole-body trajectory in a generated object whole-body trajectory set based on the Hungarian algorithm; and
the performing of the head trajectory association comprises associating a current object head detection box with an object head trajectory in a generated object head trajectory set based on the Hungarian algorithm.

10. The method according to Appendix 3, wherein the single object detection model is a model obtained by performing operations of:

training, with a first data set including object head box annotations and object whole-body box annotations, a first object detection model based on a neural network so that the first object detection model can output object head detection boxes and object whole-body detection boxes of a test image;

adding, with the trained first object detection model, lacking annotations to a second data set that lacks object head box annotations or object whole-body box annotations; and

training, with the first data set and the second data set which has been added with the lacking annotations, a second object detection model as the single object detection model;

wherein the second data set has more training samples than the first data set.

11. A device for multiple object tracking, characterized by comprising:

a memory having instructions stored thereon; and

at least one processor configured to execute the instructions to implement the method according to any one of Appendixes 1 to 10.

12. A computer-readable non-transitory storage medium storing a program, characterized in that the program, when executed by a computer, causes the computer to:

determine a plurality of object whole-body detection boxes in a current input image by performing object whole-body detection, and, determine a plurality of object head detection boxes in the current input image by performing object head detection;

determine whole-body identifiers of the plurality of object whole-body detection boxes by performing whole-body trajectory association, to update an object whole-body trajectory set;

determine head identifiers of the plurality of object head detection boxes by performing head trajectory association, to update an object head trajectory set;

determine a plurality of object whole-body prediction boxes corresponding to the plurality of object head detection boxes based on positions and sizes of the plurality of object head detection boxes;

determine object whole-body association boxes of the plurality of object head detection boxes in the plurality of object whole-body detection boxes based on areas occupied by the plurality of object whole-body prediction boxes corresponding to the plurality of object head detection boxes in the input image; and

update the object whole-body trajectory set based on whole-body identifiers of the object whole-body association boxes of the plurality of object head detection boxes.

13. The computer-readable non-transitory storage medium according to Appendix 12, wherein the updating of the object whole-body trajectory set based on the whole-body identifiers of the object whole-body association boxes of the plurality of object head detection boxes comprises:
for each trajectory in the object head trajectory set, if a whole-body identifier of an object whole-body association box of a current trajectory point of the trajectory is different from a whole-body identifier of an object whole-body association box of a previous trajectory point of the trajectory, substituting the whole-body identifier of the object whole-body association box of the current trajectory point with the whole-body identifier of the object whole-body association box of the previous trajectory point.

14. The computer-readable non-transitory storage medium according to Appendix 12, wherein the plurality of object whole-body detection boxes and the plurality of object head detection boxes in the current input image are determined with a single object detection model.

15. The computer-readable non-transitory storage medium according to Appendix 12, wherein the method is configured to be applicable to online multiple object tracking.

16. The computer-readable non-transitory storage medium according to Appendix 12, wherein the determining of the whole-body identifiers of the plurality of object whole-body detection boxes and the determining of the head identifiers of the plurality of object head detection boxes are based on an object tracking algorithm.

17. The computer-readable non-transitory storage medium according to Appendix 16, wherein the whole-body identifiers of the plurality of object whole-body detection boxes in the current input image are determined through a first Kalman filter; and
the head identifiers of the plurality of object head detection boxes in the current input image are determined through a second Kalman filter different from the first Kalman filter.

18. The computer-readable non-transitory storage medium according to Appendix 13, wherein determining an object whole-body prediction box corresponding to an object head detection box among the plurality of object head detection boxes comprises:

    determining an abscissa component of a position of the object whole-body prediction box by linearly combining an abscissa component of a position of and a width of the object head detection box;

    determining an ordinate component of the position of the object whole-body prediction box by linearly combining an ordinate component of the position of and a height of the object head detection box;

    determining a width of the object whole-body prediction box by enlarging the width of the object head detection box; and

    determining a height of the object whole-body prediction box by enlarging the height of the head detection box.

19. The computer-readable non-transitory storage medium according to Appendix 12, wherein the determining of the object whole-body association boxes of the plurality of object head detection boxes in the plurality of object whole-body detection boxes comprises:

    determining an Intersection over Union matrix based on the plurality of object whole-body prediction boxes and the plurality of object whole-body detection boxes; and

    applying the Hungarian algorithm to the Intersection over Union matrix to determine a corresponding object whole-body association box of each object head detection box; and

    wherein each element in the Intersection over Union matrix is an Intersection over Union between a corresponding object whole-body detection box among the plurality of object whole-body detection boxes and a corresponding object whole-body prediction box among the plurality of object whole-body prediction boxes.

20. The computer-readable non-transitory storage medium according to Appendix 12, wherein the performing of the whole-body trajectory association comprises associating a current object whole-body detection box with an object whole-body trajectory in a generated object whole-body trajectory set based on the Hungarian algorithm; and
the performing of the head trajectory association comprises associating a current object head detection box with an object head trajectory in a generated object head trajectory set based on the Hungarian algorithm.

**Claims**

1.  A method (100) for multiple object tracking, comprising:

    determining (Op101) a plurality of object whole-body detection boxes in a current input image by performing object whole-body detection, and, determining a plurality of object head detection boxes in the current input image by performing object head detection;
    determining (Op103) whole-body identifiers of the plurality of object whole-body detection boxes by performing whole-body trajectory association, to update an object whole-body trajectory set;
    determining (Op105) head identifiers of the plurality of object head detection boxes by performing head trajectory association, to update an object head trajectory set;

determining (Op107) a plurality of object whole-body prediction boxes corresponding to the plurality of object head detection boxes based on positions and sizes of the plurality of object head detection boxes;

determining (Op109) object whole-body association boxes of the plurality of object head detection boxes in the plurality of object whole-body detection boxes based on areas occupied by the plurality of object whole-body prediction boxes corresponding to the plurality of object head detection boxes in the input image; and

updating (Op111) the object whole-body trajectory set based on whole-body identifiers of the object whole-body association boxes of the plurality of object head detection boxes.

2.  The method according to claim 1, wherein the updating of the object whole-body trajectory set based on the whole-body identifiers of the object whole-body association boxes of the plurality of object head detection boxes comprises: for each trajectory in the object head trajectory set, if a whole-body identifier of an object whole-body association box of a current trajectory point of the trajectory is different from a whole-body identifier of an object whole-body association box of a previous trajectory point of the trajectory, substituting the whole-body identifier of the object whole-body association box of the current trajectory point with the whole-body identifier of the object whole-body association box of the previous trajectory point.

3.  The method according to claim 1, wherein the plurality of object whole-body detection boxes and the plurality of object head detection boxes in the current input image are determined with a single object detection model.

4.  The method according to claim 1, wherein the method is configured to be applicable to online multiple object tracking.

5.  The method according to claim 1, wherein the determining of the whole-body identifiers of the plurality of object whole-body detection boxes and the determining of the head identifiers of the plurality of object head detection boxes are based on an object tracking algorithm.

6.  The method according to claim 5, wherein the whole-body identifiers of the plurality of object whole-body detection boxes in the current input image are determined through a first Kalman filter; and
    the head identifiers of the plurality of object head detection boxes in the current input image are determined through a second Kalman filter different from the first Kalman filter.

7.  The method according to claim 1, wherein determining an object whole-body prediction box corresponding to an object head detection box among the plurality of object head detection boxes comprises:

    determining an abscissa component of a position of the object whole-body prediction box by linearly combining an abscissa component of a position of the object head detection box and a width of the object head detection box;
    determining an ordinate component of the position of the object whole-body prediction box by linearly combining an ordinate component of the position of the object head detection box and a height of the object head detection box;
    determining a width of the object whole-body prediction box by enlarging the width of the object head detection box; and
    determining a height of the object whole-body prediction box by enlarging the height of the head detection box.

8.  The method according to claim 1, wherein the determining of the object whole-body association boxes of the plurality of object head detection boxes in the plurality of object whole-body detection boxes comprises:

    determining an Intersection over Union matrix based on the plurality of object whole-body prediction boxes and the plurality of object whole-body detection boxes; and
    applying the Hungarian algorithm to the Intersection over Union matrix to determine a corresponding object whole-body association box of each object head detection box; and
    wherein each element in the Intersection over Union matrix is an Intersection over Union between a corresponding object whole-body detection box among the plurality of object whole-body detection boxes and a corresponding object whole-body prediction box among the plurality of object whole-body prediction boxes.

9.  The method according to claim 1, wherein the performing of the whole-body trajectory association comprises associating a current object whole-body detection box with an object whole-body trajectory in a generated object whole-body trajectory set based on the Hungarian algorithm; and
    the performing of the head trajectory association comprises associating a current object head detection box with an object head trajectory in a generated object head trajectory set based on the Hungarian algorithm.

10. The method according to claim 3, wherein the single object detection model is a model obtained by performing operations of:

training, with a first data set including object head box annotations and object whole-body box annotations, a first object detection model based on a neural network so that the first object detection model can output object head detection boxes and object whole-body detection boxes of a test image;

adding, with the trained first object detection model, lacking annotations to a second data set that lacks object head box annotations or object whole-body box annotations; and

training, with the first data set and the second data set which has been added with the lacking annotations, a second object detection model as the single object detection model;

wherein the second data set has more training samples than the first data set.

11. A device (800) for multiple object tracking, **characterized by** comprising:

a memory (801) having instructions (Inst) stored thereon; and

at least one processor (803) configured to execute the instructions to implement the method according to any one of claims 1 to 10.

12. A computer-readable non-transitory storage medium storing a program, **characterized in that** the program, when executed by a computer, causes the computer to:

determine (Op101) a plurality of object whole-body detection boxes in a current input image by performing object whole-body detection, and, determine a plurality of object head detection boxes in the current input image by performing object head detection;

determine (Op103) whole-body identifiers of the plurality of object whole-body detection boxes by performing whole-body trajectory association, to update an object whole-body trajectory set;

determine (Op105) head identifiers of the plurality of object head detection boxes by performing head trajectory association, to update an object head trajectory set;

determine (Op107) a plurality of object whole-body prediction boxes corresponding to the plurality of object head detection boxes based on positions and sizes of the plurality of object head detection boxes;

determine (Op109) object whole-body association boxes of the plurality of object head detection boxes in the plurality of object whole-body detection boxes based on areas occupied by the plurality of object whole-body prediction boxes corresponding to the plurality of object head detection boxes in the input image; and

update (Op111) the object whole-body trajectory set based on whole-body identifiers of the object whole-body association boxes of the plurality of object head detection boxes.

13. The computer-readable non-transitory storage medium according to claim 12, wherein the updating of the object whole-body trajectory set based on the whole-body identifiers of the object whole-body association boxes of the plurality of object head detection boxes comprises:

for each trajectory in the object head trajectory set, if a whole-body identifier of an object whole-body association box of a current trajectory point of the trajectory is different from a whole-body identifier of an object whole-body association box of a previous trajectory point of the trajectory, substituting the whole-body identifier of the object whole-body association box of the current trajectory point with the whole-body identifier of the object whole-body association box of the previous trajectory point.

14. The computer-readable non-transitory storage medium according to claim 12, wherein the plurality of object whole-body detection boxes and the plurality of object head detection boxes in the current input image are determined with a single object detection model.

15. The computer-readable non-transitory storage medium according to claim 12, wherein the method is configured to be applicable to online multiple object tracking.

**100**   ( Start )

Op101

Determine detection boxes

Op103

Determine whole-body identifiers of object whole-body detection boxes

Op105

Determine head identifiers of object head detection boxes

Op107

Determine object whole-body prediction boxes of object head detection boxes

Op109

Determine object whole-body association boxes of object head detection boxes

Op111

Update object whole-body trajectory set

( End )

# Figure 1

Im[t-1]

**Figure 2a**

**Figure 3a**

Im[t]

**Figure 2b**

**Figure 3b**

**Figure 2c**

Figure 4a

Figure 4b

Figure 5a

Figure 5b

b[1]

B'[1]

b[2]

B'[2]

**Figure 6a**

Bp"[1]
(即Bp[1]
ID: wid01)

Bp"[2]
(即Bp[2]
ID: wid02)

B"[1]
(B"[1]=B[1]
ID: wid01)

B"[2]
(B"[1]=B[2]
ID: wid02)

**Figure 6b**

Bp[1]
(ID: wid01)

Bp[2]
(ID: wid02)

B[1]
(ID: wid02)

B[2]
(ID: wid01)

**Figure 7a**

(ID: wid02)
wTr[2]

(ID: wid01)
wTr[1]

**Figure 7b**

**800**

**Instructions
Inst**

**Memory 801**

**Processor 803**

**Figure 8**

Figure 9

**1000**

```
CPU  ┌─ 1001        ROM  ┌─ 1002        RAM  ┌─ 1003
```

┌─ 1004

┌─ 1005

Input/output interface

| Input device ┌─ 1006 | Output device ┌─ 1007 | Storage device ┌─ 1008 | Communica tion device ┌─ 1009 | Driver ┌─ 1010 |

┌─ 1011

Removable medium

Figure 10

Europäisches
Patentamt

European
Patent Office

Office européen
des brevets

# EUROPEAN SEARCH REPORT

**Application Number**

EP 25 18 3277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUI YURONG ET AL: "Research on student group tracking algorithm based on teaching scene", 20221202, vol. 12288, 2 December 2022 (2022-12-02), pages 122881D-122881D, XP060174835, ISSN: 0277-786X, DOI: 10.1117/12.2640902 ISBN: 978-1-5106-5594-2 * abstract * * equation 3; sections "2. Related Work", "3. Our Method", "3.1. The detector", "3.2. The tracker", "3.3. Unmatched trajectory correction" * | 1-15 | INV. G06T7/246 G06T7/277 G06V10/00 |
| A | JIANJUN GAO ET AL: "OccluTrack: Rethinking Awareness of Occlusion for Enhancing Multiple Pedestrian Tracking", ARXIV.ORG, CORNELL UNIVERSITY LIBRARY, 201 OLIN LIBRARY CORNELL UNIVERSITY ITHACA, NY 14853, 19 September 2023 (2023-09-19), XP091617598, * abstract; figure 3 * * section "I. Introduction" * | 1-15 | |

**TECHNICAL FIELDS SEARCHED (IPC)**

G06T

The present search report has been drawn up for all claims

| Place of search | Date of completion of the search | Examiner |
|---|---|---|
| Munich | 27 November 2025 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

**EP 4 734 056 A1**

### Patent documents cited in the description

- CN 202411495782

- CN 116958873 A